# EUROPEAN PATENT SPECIFICATION

(11) **EP 0 399 726 B1**
(45) Date of publication and mention of the grant of the patent: **30.11.1994**
(21) Application number: 90305350.2
(22) Date of filing: 17.05.1990
(51) Int. Cl.: B60P 7/08

(54) **Load tying-up apparatus**
Lastzurrgurt
Sangle l'amarrage pour le chargement

(30) Priority: 22.05.1989 JP 58928/89 U
(43) Date of publication of application: 28.11.1990
(73) Proprietor: ELEPHANT CHAIN BLOCK COMPANY LIMITED, Osaka-Sayama-shi Osaka (JP)
(72) Inventor: Kobayashi, Eikichi, Iwamuro, Osaka-Sayama-shi, Osaka (JP)
(74) Representative: Jones, Andrée Zena

(56) References cited:
- EP-A- 0 085 965
- EP-A- 0 246 210
- DE-A- 2 736 973
- US-A- 3 749 366
- US-A- 4 402 473
- US-A- 4 860 606

## Description

The present invention relates to a load tying-up apparatus, and more particularly to a load tying-up apparatus having a fixing side belt and an adjusting side belt so that the adjusting side belt is wound up on a take-up shaft or drawn out therefrom to adjust a length of the adjusting side belt so as to tie-up, for example, loads on a truck, thereby fixing them onto a rear body thereof.

Conventionally, the load tying-up apparatus using the belt, as disclosed in, for example, the Japanese Utility Model Laid-Open Gazette No. Sho 59-160,165 (JP-U-59-160 165), is so constructed that the body supporting at one lengthwise end thereof a fixing side belt rotatably supports at the other lengthwise end a take-up shaft which fixes at both axial ends thereof ratchet wheels respectively so as to wind up the adjusting side belt onto the take-up shaft, a U-like-shaped lever having a pair of lever bodies is rotatably supported to the take-up shaft, to the body is mounted an anti-reverse-rotation pawl engageable with the ratchet wheel , and to the lever is mounted a feed pawl engageable wtih the ratchet wheel, so that the anti-reverse-rotation pawl and feed pawl are always biased by spring toward the ratchet wheels and the lever is operated in reciprocation to forcibly rotate the take-up shaft and the adjusting side belt is wound up onto the take-up shaft, thereby tying up the loads on the truck.

The feed pawl is slidably supported between the lever bodies through a guide groove provided at the lever body, the anti-reverse-rotation pawl is slidably supported to the body through a guide groove provided thereat. The feed pawl is provided with an operating piece, so that the operating piece is not operated and the feed pawl is raised against the spring, thereby disengaging the feed pawl from the ratchet wheel. At one end of the body supported to the take-up shaft is provided a regulating portion engageable with the feed pawl and regulating the swinging motion of the lever at an angle exceeding a predetermined value, and a lock part is provided which locks at the horizontal position the swinging motion of the lever with respect to the body when the feed pawl is raised against the spring to disengage from the regulating portion so as to allow the lever to swing to the horizontal position at an angle of about 180° with respect to the body.

When the lever is horizontally positioned, the feed pawl provided at the lever is fitted into the lock part to disengage from the ratchet wheel and the disengaging state is maintained. The anti-reverse-rotation pawl provided at the body is forcibly slided by a cam provided at the utmost end of lever body, thereby disengaging from the ratchet wheel. As a result, the lever is operated to its horizontal position and the ratchet wheels and take-up shaft fixing the wheels are rotatable without being retained by each pawl. In this state, the adjusting side belt wound onto the take-up shaft can be drawn out therefrom.

The above-mentioned conventional load tying-up apparatus is so constructed that, when the loads are untied, the feed pawl is raised as above-mentioned to disengage from the ratchet wheel and the lever is turned to the horizontal position of an angle of about 180° with respect to a inner frame, thereby disengaging the feed pawl and anti-reverse-rotation pawl from the ratchet wheels to allow the ratchet wheels and take-up shaft to freely rotate. Hence, for example, in a case where the goods loaded fully at both sides of the rear body of the truck are tied up, if the feed pawl and anti-reverse-rotation pawl are released for untying the goods, the take-up shaft becomes freely rotatable and the adjusting belt is instantaneously loosened by resiliency against the goods tied-up by the belt, thereby creating the problem in that the goods may unintentionally fall from the truck.

An object of the present invention is to provide a load tying-up apparatus which, when the loads are untied, can gradually loosen the adjusting side belt to safely untie the loads and which is usable as a hoist for loading and unloading them.

The present invention provides a load tying-up apparatus comprising a body having a fixing side belt; an adjusting side belt; a take-up shaft rotatably supported to said body for winding up said adjusting belt; an operating lever swingably supported to said take-up shaft; and a transmission mechanism provided between said lever and said take-up shaft, for transmitting therethrough a driving force caused by a swinging motion of the lever to said take-up shaft, characterized in that said take-up shaft is provided at one axial end thereof with an annular part extending radially outwardly of said take-up shaft and a projecting shaft axially extending in continuation of said annular part and having a threaded portion, said threaded portion screwing with a driving member having at the outer periphery thereof a gear part; in that an anti-reverse-rotation gear is supported by said take-up shaft between said annular part of the take-up shaft and said driving member so as to be freely rotatable in relation thereto, said anti-reverse-rotation gear being positioned to be brought into friction engagement with said annular part and the driving member by said driving member being screwed forwardly on the threaded portion; in that said body has an anti-reverse-rotation pawl engageable with said anti-reverse-rotation gear, and said lever has a transmitting pawl engageable with or disengageable from said gear part; in that said transmission mechanism comprises said annular part of the take-up shaft, said driving member, said anti-reverse-rotation gear, and said anti-reverse-rotation pawl which operate together as a mechanical brake, said transmission mechanism operable as a mechanical brake being interposed between said annular part and said lever; and in that said lever is swingably supported to said driving member.

Accordingly the load tying-up apparatus of the invention constructed as above-mentioned transmits the driving force caused by the swinging motion to lever to the take-up shaft through the mechanical brake. Hence, when the loads are untied, the mechanical brake can operate to gradually loosen the adjusting side belt by releasing the lever, thereby enabling safe operation even during the untying the loads. Also, the apparatus of the invention, which has the mechanical brake, is usable for loading or unloading the goods.

The transmission mechanism having the mechanical brake is positioned between the annular part and the lever, so that the body and lever positioned at the driven disc side can protect the transmission mechanism from being hit from the exterior when in use. Furthermore, at the take-up shaft are integrally provided the driven disc constituting the mechanical brake and the projecting shaft having the screw thread, and the lever is swingably supported to the driving member engageable with the screw thread, whereby the number of parts can be reduced and the assembly work can be simple, easy and quick to perform.

The above and further objects and novel features of the invention will more fully appear from the following detailed description when the same is read in connection with the accompanying drawings.
Fig.1 is a partially omitted plan view of an embodiment of a load tying-up apparatus of the invention,
Fig.2 is a side view thereof,
Fig.3 is a longitudinally sectional view of the principal portion of the Fig.1 embodiment,
Fig.4 is an illustration of the state where a transmission mechanism ties up loads,
Fig.5 is an illustration of the state where the transmission mechanism unties them,
Fig.6 is an illustration of the state where an adjusting belt is wound onto a take-up shaft,
Fig.7 is a sectional view showing engagement of an anti-reverse-rotation pawl with an anti-reverse-rotation gear,
Fig.8 is a sectional view showing disengagement of the anti-reverse-rotation pawl from the same,
Fig.9 is an illustration of mounting a transmission pawl to a lever,
Fig.10 is a sectional view showing engagement of a feed pawl at the transmission pawl with gear part,
Fig.11 is a sectional view showing engagement of a return pawl at the transmission pawl with the gear part,
Fig.12 is a sectional view of a modified embodiment of the invention, corresponding to Fig.7 , and
Fig.13 is a sectional view of another modified embodiment of the invention , corresponding to Fig.10.

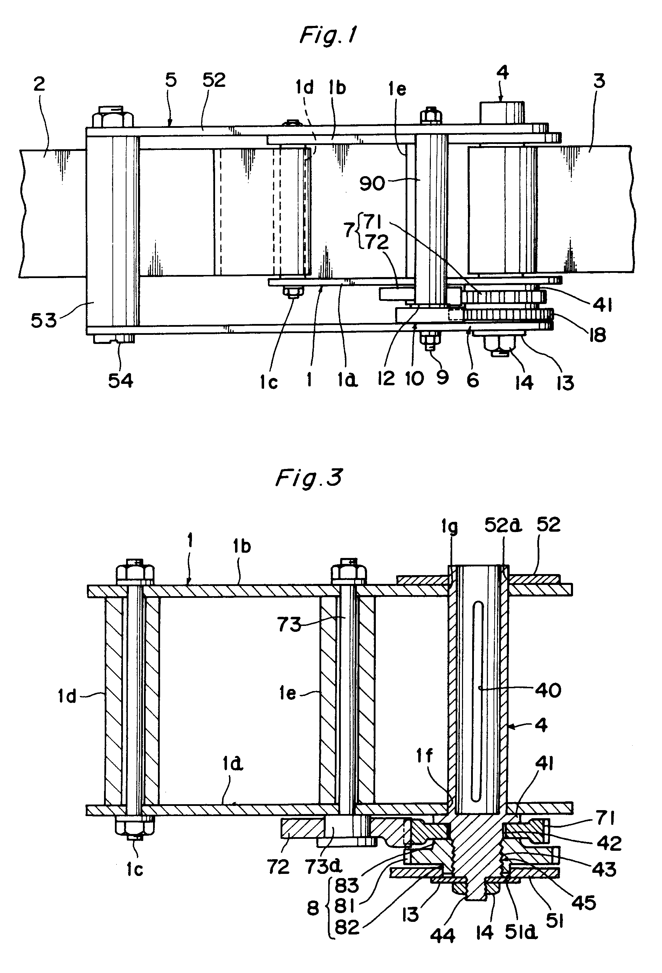

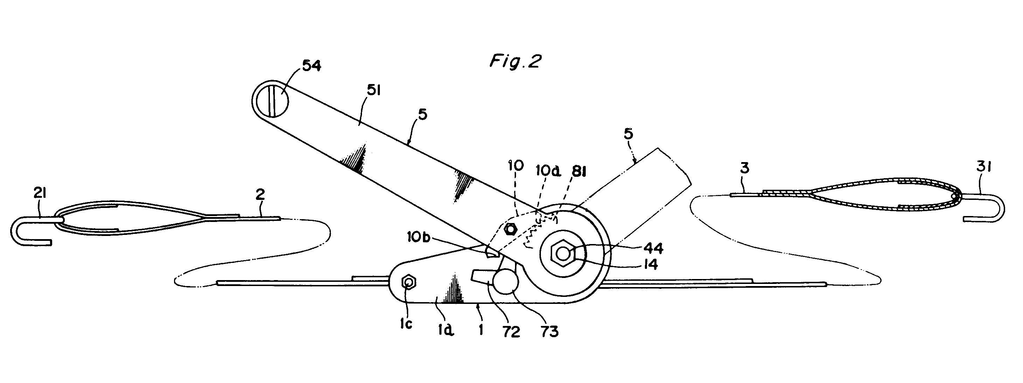

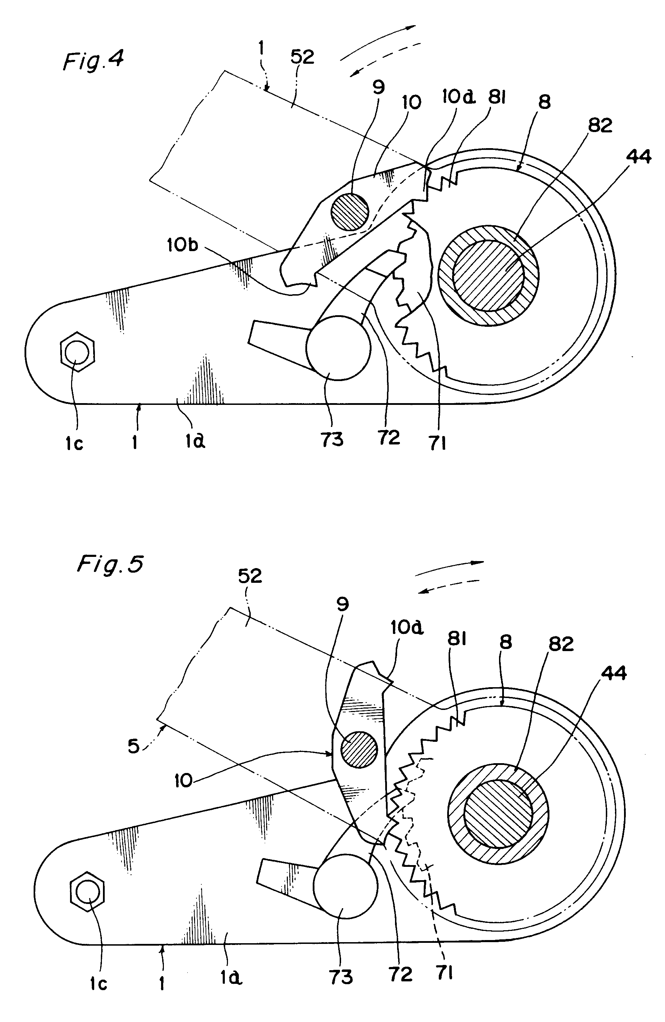

In Figs.1 and 2, reference numeral 1 designates a frame-like-shaped body provided with a pair of elongate side plates 1a and 1b opposite to each other at a predetermined interval, between one lengthwise ends of the side plates 1a and 1b is provided a support rod 1c through a tubular spacer 1d shown in Fig.3, between the intermediate portions of the plates 1a and 1b is provided through a tubular spacer 1e shown in Fig.3 a connecting shaft 73 used also as a pawl shaft for pivotally supporting an anti-reverse-rotation pawl 72 to be discussed below, and between the other length-wise ends of the plates 1a and 1b is rotatably supported through supports bores 1f and 1g shown in Fig.3 a take-up shaft 4 for winding up an adjusting side belt 3, the take-up shaft 4 siwngably supporting at both axial ends thereof an operating lever 5. The operating lever 5 comprises a pair of opposite arms 51 and 52 and a tubular grip 53 connected between the utmost ends of the arms 51 and 52 through a connecting bolt 54, and is U-like-shaped. Through bores 51a and 52a are formed at the roots of the arms 51 and 52 at the lever 5 respectively, so that the arms 51 and 52 are swingably supported through the through bores 51a and 52a to both ends of the take-up shaft 4 projecting outwardly from both the side plates 1a and 1b respectively.

Between part of the arm 51 of lever 5 supported to the take-up shaft 4 and the side plate 1a at the body 1 is interposed a transmission mechanism 6 having a mechanical brake 7 through which the driving force caused by the swinging motion of lever 5 is transmitted to the take-up shaft 4.

The transmission mechanism 6, as shown in Fig. 3, is so constructed that a flanged annular part 41 extending radially outwardly of the take-up shaft 4 is integrally fromed at one axial end thereof, a projecting shaft 45 having a larger diameter threaded portion 43 and a smaller diameter threaded portion 44 integrally projects axially outwardly from the annular part 41 through a round shaft portion 42, a driving member 8 having at the outer periphery thereof gear part 81 and at the root a boss 82 for supporting the lever 5 and an urging portion 83 which are integral with the driving member 8, screws with the larger diameter threaded portion 43 in relation of being axially projectable and retractable, between the driving member 8 and the annular part 41 and at the outer periphery of the round shaft 42 is rotatably supported an anti-reverse-rotation gear 71 of a ratchet wheel, an anti-reverse-rotation pawl 72 engageable or disengageable with or from the anti-reverse-rotation gear 71 is supported to a pawl shaft 73a projecting outwardly of the side plate 1a from one axial end of a connecting shaft 73 connecting the side plates 1a and 1b, and engagement maintaining means to be discussed below biases the pawl 72 in the direction of engaging with the anti-reverse-rotation gear 71 so as to maintain the engagement, so that the driving member 8, anti-reverse-rotation gear 71 and anti-reverse-rotation pawl 72 constitute a mechanical brake 7. Furthermore, a transmitting pawl 10 comoprising a feed pawl 10a and a return pawl 10b engageable or disengageable with or from the gear part 81 at the driving member 8 is swingably provided at the lever 5 through a pawl shaft 9, and the lever 5 is operated in swinging motion to selectively engage the feed pawl 10a or the return pawl 10b with the gear part 81 as shown in Figs.4 and 5, so that the engagement maintaining means maintains the engagement, thereby rotating the driving member 8 normally ( in the winding direction of the adjusting belt ) or reversely ( in the rewinding direction of the same ).

Onto the outer periphery of the boss 82 at the driving member 8 is insertably supported the through bore 51a provided at one arm 51 at the lever 5, the lever 5 being rotatably supported to the boss 82. In addition, a washer 13 is attached to the outside surface of lever 5 and a tightening nut 14 screws with the smaller diameter threaded portion 44, thereby locking the lever 5.

Between the end face of driving member 8 and the washer 13 is provided a gap through which the driving member 8 is forwardly and rearwardly screwable at a predetermined axial length with respect to the larger diameter threaded portion 43.

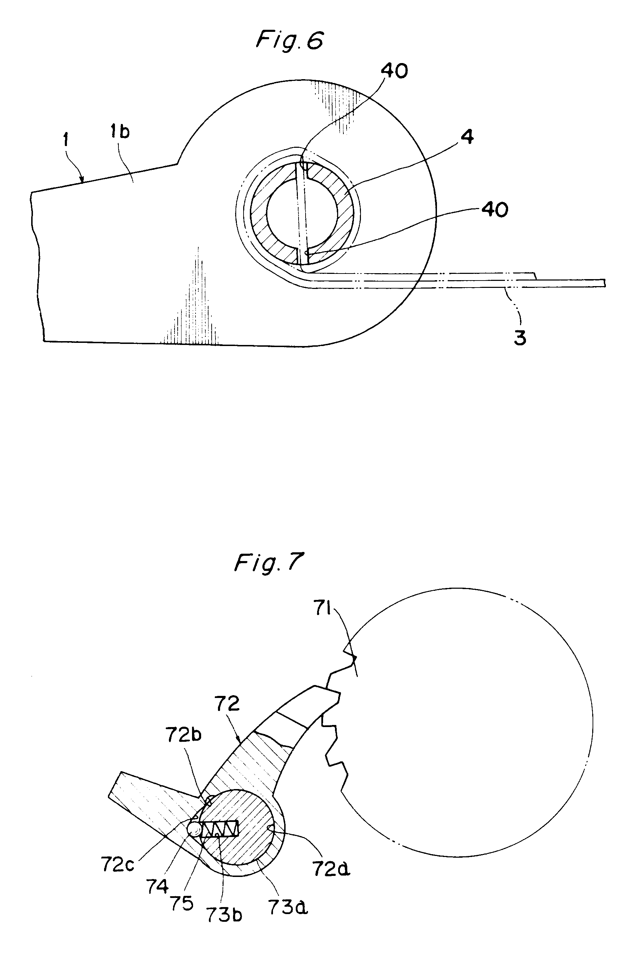

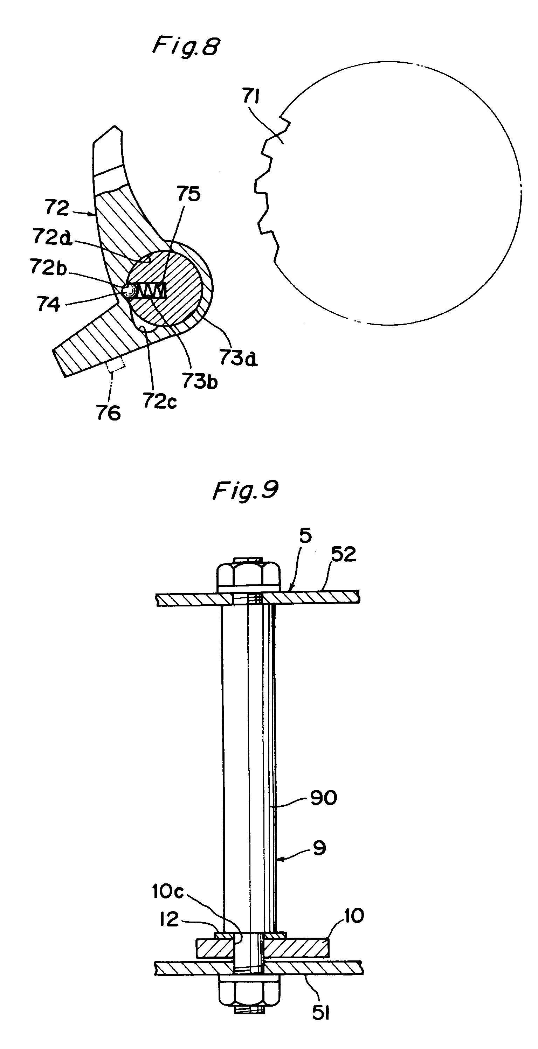

The engagement maintaining means for biasing the anti-reverse-rotation pawl 72 toward the anti-reverse-rotation gear 71 to maintain the engagement thereof is constructed as shown in Figs.7 and 8. In detail, at the outer periphery of the pawl shaft 73a at the connecting rod 13 is formed a recess 73b open toward the inner periphery of a shaft bore at the anti-reverse-rotation pawl 72, and a spring 75 is housed in the recess 73b, a ball 74 biased by the spring 75 and projecting outwardly from the open end of recess 73b, at the inner periphery of a shaft bore 72a of the anti-reverse-rotation pawl 72 is provided, for example, a recessed holding portion 72b which contacts with the ball 74 to hold the anti-reverse-rotation pawl 72 in the disengaging state from the anti-reverse-rotation gear 71, and at the inner periphery of shaft bore 72a and circumferentially apart from the holding portion 72b is provided an engageably holding portion 72c into which the ball 74 is insertable so that a biasing force thereof allows the anti-reverse-rotation pawl 72 to forcibly swing to the engagement position with the anti-reverse-rotation gear 71, thereby maintaining the engagement state. Hence, the anti-reverse-rotation pawl 72 is biased and held only by its quick swinging operation to a first position where the pawl 72 is maintained by the biasing force of ball 74 in the engaging state with the gear 71 or a second position where the pawl 72 is kept neutral without engagement with the gear 71.

The holding portion 72b, other than the recess at the inner periphery of shaft bore 72a as above-mentioned, may alternatively use the inner periphery of shaft bore 72a. In this case, as shown by the phantom line in Fig.8, it is preferable that a stopper 76 for regulating the swinging motion of anti-reverse-rotation pawl 72 toward disengagement is provided at the inside surface of the arm 51 at the lever 5.

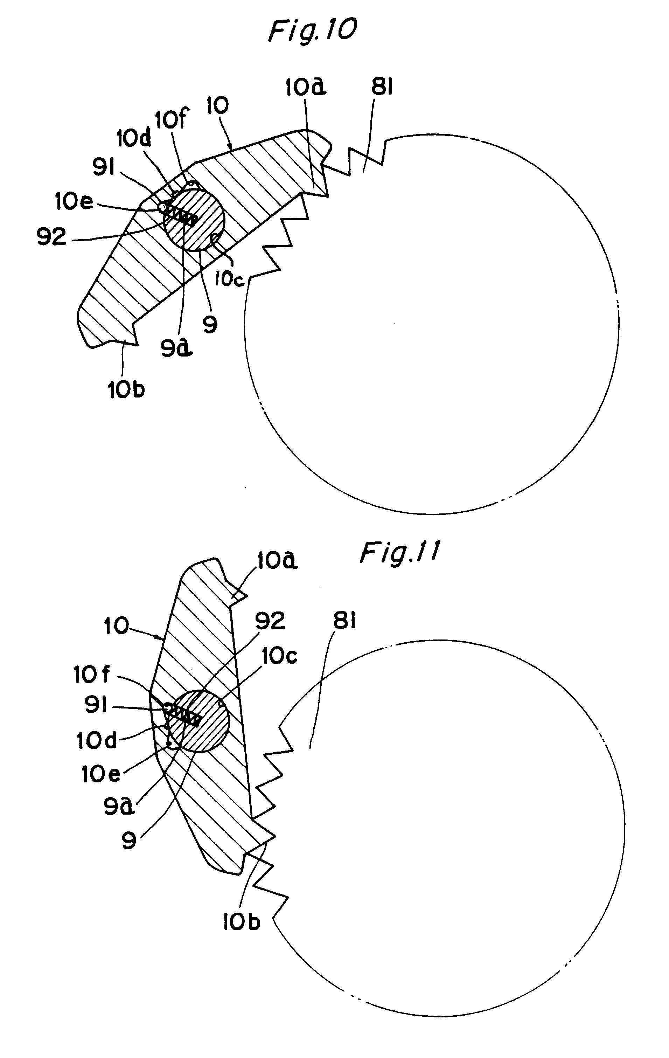

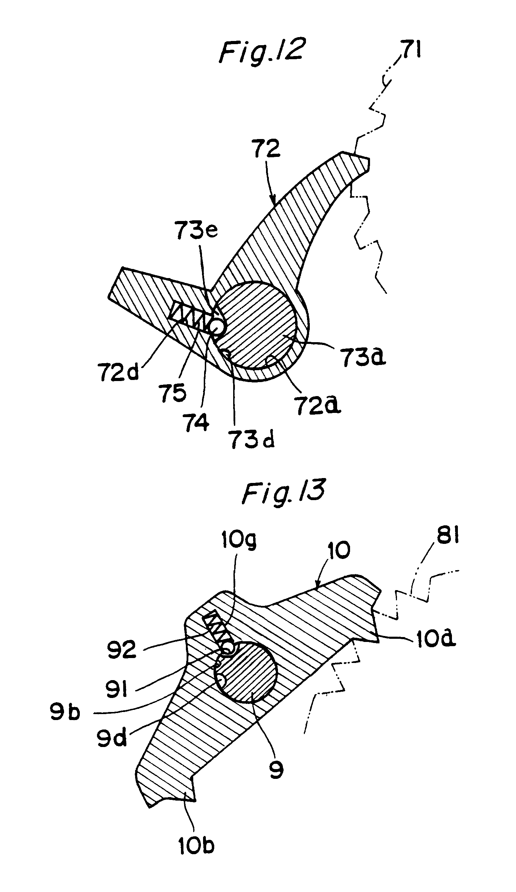

The transmitting pawl 10, as shown in Fig.9, is pivotally supported through a washer 12 at one axial end of the pawl shaft 9 supported between the arms 51 and 52, in greater detail, between one axial end face of a larger diameter portion 90 at the pawl shaft 9 and the inside surface of arm 51. Engagement maintaining means for the transmitting pawl 10 at a normal or reverse rotation switching position is constructed as shown in Figs.10 and 11. The transmitting pawl 10 shown in Figs.10 and 11 is of the same construction as that shown in Figs.7 and 8. In detail, as the same as the above-mentioned anti-reverse-rotation pawl 72, at the outer periphery of the pawl shaft 9 is formed a recess 9a open toward the inner periphery of the shaft bore at the transmitting pawl 10, a spring 92 is housed in the recess 9a, a ball 91 biased by the spring 92 so as to project from the open end of recess 9a is provided, at the inner periphery of a shaft bore 10c of the transmitting pawl 10 is provided, for example, a recessed neutral holding portion 10d which contacts with the ball 91 to hold the disengaging state of the transmitting pawl 10 from the gear part 81, and at both sides of the holding portion 10d are provided a first engageably holding portion 10e into which the ball 91 is insertable so that a biasing force thereof allows the transmitting pawl 10 to forcibly swing to the engaging position with the gear part 81 during the normal or reverse rotation so as to maintain the engaging state with the gear part 81 and a second engageably holding portion 10f for maintaining the engaging state of the return pawl 10b with the gear part 81, so that the transmitting pawl 10 is quickly operated, thereby being biased and held to the position of normal rotation, reverse rotation or neutral (release) of the gear part 81.

Alternatively, the holding portion 10d may directly use the inner periphery of shaft bore 10c as the holding surface.

In addition, in Fig.2, reference numerals 21 and 31 designate hooks mounted to free ends of the fixing side and adjusting side belts 2 and 3 respectively.

Also, in the embodiment, as shown in Figs.3 and 6, the take-up shaft 4 is formed in a drum-like shape having insertion bores 40 for the adjusting side belt 3, and the root thereof is inserted into the bores 40 and set in a folding manner, at which time the adjusting side belt 3 is desirably adjustable in length by selecting the folding position of adjusting side belt 3.

In a case where such load tying-up apparatus is assembled, at first, the take-up shaft 4 is inserted from the end thereof at the reverse side to the projection shaft 45 into the support bores 1f and 1g at the side plates 1a and 1b at the body 1 until the driven disc 41 abuts against the side plate 1a and is rotatably supported to the body 1, next, the anti-reverse-rotation gear 71 is freely fitted onto the round shaft portion 42 at the take-up shaft 4, the driving member 8 screws with the larger diameter portion 43, thereafter the arms 51 and 52 are inserted onto the boss 82 of driving member 8 and projection of take-up shaft 4 at the side plate 52 side, between the utmost ends of the arms 51 and 52 are mounted the grip 53, transmitting pawl 10, washer 12 and spacer 12a,through the bolt 54 and the pivot shaft 9 to thereby build-in the lever 5, and thereafter the nut 14 screws with the smaller diameter portion 44 from the outside of arm 51 through the nut 14 to mount the lever 5 to the boss 82 of driving member 8, in turn the take-up shaft 4, in a manner of not-escaping therefrom.

In such assembly, between the annular part 41 and one arm 51 , in other words, between the one side-plate 1a and the arm 51, is positioned a transmission mechanism 6 having the mechanical brake 7, whereby the body 1 and arm 51 of the lever 5 can protect the transmission mechanism 6, and when the lever 5 is mounted to the body 1 at the take-up shaft 4 side in such a manner that one arm 51 is mounted only to the boss 82 through the tightening nut 14,so that the other arm 52 is locked, whereby there is no need that an extra locking member for the other arm 52 is provided at the arm 52 side of take-up shaft 4.

In the load tying-up apparatus of the invention constructed as the above-mentioned, in order to tie up goods loaded on, for example, the rear body of a truck, the hook 21 at the fixing side belt 2 engages with one engaging portion at the rear body of the truck and the adjusting side belt 3, while both the fixing side and adjusting side belts 2 and 3 are stretching over the loads, engages at the hook 31 with another engaging portion at the rear body.

Thereafter, the utmost end of the adjusting side belt 3 inserted into the insertion bores 40 at the take-up shaft 4 is pulled to fully stretch the belt 3 and the lever 5 is repeatedly turned in reciprocation. whereby an operating force of the lever 5 is transmitted to the driving member 8 through the transmitting pawl 10, and the take-up shaft 4 is rotated in the winding direction through the anti-reverse-rotation gear 71, thereby tying up the loads loaded on the truck.

Referring to Fig.10, the feed pawl 10a of transmitting pawl 10 engages with the gear part 81 and this engagement is maintained by engaging the ball 91 with the first engagement maintaining portion 10e, so that the lever 5 is moved clockwise as shown by the solid arrow in Fig.4. Hence, the engagement of feed pawl 10a with the gear part 81 allows the driving member 8 to screw toward the driven disc 41, thereby being integrated with the anti-reverse-rotation gear 71 and driven disc 41 by means of thrust. Also, while the anti-reverse-rotation pawl 72 is sliding with respect to the anti-reverse-rotation gear 71, the driving force of driving member 8 is transmitted to the take-up shaft 4, so that the take-up shaft 4 is forcibly rotated in the winding direction to wind up the adjusting belt 3, thereby enabling the belt 3 to be pulled to a predetermined extent.

When the lever 5, after clockwise turned as above-mentioned, is intended to be turned counterclockwise as shown by the dotted line in Fig.4, the anti-reverse-rotation pawl 72 engages with the anti-reverse-rotation gear 71 to restrain the take-up shaft 4 from reverse rotation in the state where the adjusting belt 3 is tightly wound, and the feed pawl 10a at the transmitting pawl 10 slides on the gear part 81, whereby the lever 5 only swings counterclockwise without rotating the driving member 8. Accordingly, the lever 5 is repeatedly turned in reciprocation, thereby enabling the apparatus to tie up the loads.

Also, as shown in Fig.5, the return pawl 10b engages with the gear part 81 and this engagement is maintained by engaging the ball 91 with the second engagement holding portion 10f, and thereafter the lever 5 is repeatedly turned in reciprocation with respect to the body 1, thereby untying the loads to be unloaded from the rear body of the truck.

When the lever 5 is turned clockwise as shown by the solid arrow in Fig.5, the return pawl 10b at the transmitting pawl 10 slides on the gear part 81 and only the lever 5 is turned clockwise without rotating the driving member 8. When the lever 5 is turned counterclockwise as shown by the dotted-line arrow in Fig.5, the return pawl 10b engages with the gear part 81 to reversely rotate the driving member 8, which screws away from the annular part 41. Hence, the driving member 8 is released from the anti-reverse-rotation gear 71 and annular part 41, so that the take-up shaft 4 can reversely rotate to an extent of unscrewing the driving member 8, resulting in that the adjusting belt 3 is loosened only by the unscrewing amount. Accordingly, the lever 5 is repeatedly turned in reciprocation to gradually draw the adjusting belt 3 out of the take-up shaft 4, thereby loosening the belts 2 and 3 to untie the loads. In other words, the driving member 8 is again integral with the annular part 41 through the anti-reverse-rotation gear 71 by means of the reverse rotation of take-up shaft 4, thereby restraining further reverse rotation and stopping drawing-out of the belt 3, but the belt 3 is drawn out to a predetermined extent by the next reciprocation of lever 5, thus enabling the loads to be untied by the repeated operation of lever 5.

Hence, there is no fear that, when the loads are untied, the take-up shaft becomes freely rotatable at a stroke as conventional, the adjusting belt is instantaneously loosened by the resiliency to result in that the loads unintentionally fall from the rear body of the truck.

Since the mechanical brake 7 is provided, the adjusting belt 3 is gradually drawn out from the take-up shaft 4 so as to loosen the belts 2 and 3, and also the function of mechanical brake 7 is utilized to apply the load tying-up apparatus for loading and unloading the loads on the truck.

The above-mentioned embodiment of the load tying-up apparatus of the invention is provided between the anti-reverse-rotation pawl 72 and the pawl shaft 73a with a holding construction which is capable of holding the anti-reverse-rotation pawl 72 at the position where it disengages from the anti-reverse-rotation gear 71, and between the transmitting pawl 10 and the pawl shaft 9 with a holding construction which is capable of holding the feed pawl 10a and return pawl 10b in the neutral position where they disengage from the gear part 81, whereby, in a case where the adjusting belt 3 is intended to be quickly drawn out from the take-up shaft 4 for preparing the tie-up work, or there is not at all the fear that the untied loads may fall , when the respective holding means disengage the anti-reverse-rotation pawl 72 from the anti-reverse-rotation gear 71 and the transmitting pawl 10 from the gear part 81, the anti-reverse-rotation gear 71 and driving member 8 become freely rotatable, whereby in spite of providing the mechanical brake 7, the adjusting belt 3 can desirably be drawn out from the take-up shaft 4.

In the above-mentioned holding construction , the resilient member of the spring and the contact member of the ball are housed in the recesses provided at the shaft bores at the pals 72 and 10 respectively, thereby having the advantage in that the load tying-up apparatus of the invention is prevented from being hit by a foreign object or stained with mud.

Alternatively, the biasing means of the anti-reverse-rotation pawl 72 to the anti-reverse-rotation gear 71 may be so constructed that, as shown in Fig.12, a recess 72d is provided at the inner periphery of the shaft bore of the anti-reverse-rotation pawl 72, a spring 75 is housed in the recess 72d, a ball 74 biased by the spring 75 so as to project from an open end of the recess 72d is provided , and a recessed neutral holding portion 73d and an engagement holding portion 73e are provided at the outer periphery of the pawl shaft 73a.

Alternatively, the holding construction of the transmitting pawl 10 to the gear part 81 may, as shown in Fig.13, be so constructed that a recess 10g is provided at the transmitting pawl 10, a pring 92 is housed in the recess 10g, a ball 91 biased by the spring 92 to project from an open end of the recess 19g is provided, and a neutral holding portion 9b and a pair of first and second engageably holding portions 9c and 9d are provided at the pawl shaft 9.

Also, the springs 75 and 92 may alternatively be leaf springs respectively and the balls 74 and 91 may be formed in pins each having a spherical head, which construction is not defined.

The load tying-up appartus of the invention constructed as the above-mentioned has the advantage as described in the following :
Since the transmission mechanism 6 having the mechanical brake 7 for transmitting the driving force caused by swinging motion of lever 5 is interposed between the take-up shaft 4 rotatably supported to the body 1 and the lever 5 swingably supported to the take-up shaft 4, when the loads are untied, the adjusting belt 3 wound onto the take-up shaft 4 is gradually drawn out therefrom through the mechanical brake 7, thereby preventing the loads from intentionally falling because the belt 3 is instantaneously loosened by the resiliency against tie-up. Also, since the mechanical brake 7 is provided , the function thereof is used to enable loading and unloading of loads on the truck.

At one axial end of take-up shaft 4 is integrally formed the annular part 41 extending radially outwardly thereof and between the drivendisc 41 and the lever 5 is interposed the transmission mechanism 6 having the mechanical brake 7, whereby the lever 5 can protect the transmission mechanism 6 from being impacted from the exterior.

Furthermore, at the one axial end of take-up shaft 4 is provided the projecting shaft 45 having the annular part 41 and threaded portion 43, the driving member 8 provided with the gear part 81 screws with the threaded portion 43, and the lever 5 is swingably supported to the driving member 8, thereby reducing the number of parts, simplifying construction of the apparatus, and facilitating assembly work thereof.

## Claims

1. A load tying-up apparatus comprising a body (1) having a fixing side belt (2); an adjusting side belt (3); a take-up shaft (4) rotatably supported to said body for winding up said adjusting belt; an operating lever (5) swingably supported to said take-up shaft (4); and a transmission mechanism (6) provided between said lever (5) and said take-up shaft (4), for transmitting therethrough a driving force caused by a swinging motion of the lever (5) to said take-up shaft (4), characterized in that said take-up shaft (4) is provided at one axial end thereof with an annular part (41) extending radially outwardly of said take-up shaft (4) and a projecting shaft (45) axially extending in continuation of said annular part (41) and having a threaded portion (43), said threaded portion (43) screwing with a driving member (8) having at the outer periphery thereof a gear part (81); in that an anti-reverse-rotation gear (71) is supported by said take-up shaft (4) between said annular part (41) of the take-up shaft and said driving member (8) so as to be freely rotatable in relation thereto, said anti-reverse-rotation gear (71) being positioned to be brought into friction engagement with said annular part (41) and the driving member (8) by said driving member (8) being screwed forwardly on the threaded portion (43); in that said body (1) has an anti-reverse-rotation pawl (72) engageable with said anti-reverse-rotation gear (71), and said lever (5) has a transmitting pawl (10) engageable with or disengageable from said gear part (81); in that said transmission mechanism (6) comprises said annular part (41) of the take-up shaft (4), said driving member (8), said anti-reverse-rotation gear (71), and said anti-reverse-rotation pawl (72) which operate together as a mechanical brake (7), said transmission mechanism operable as a mechanical brake being interposed between said annular part (41) and said lever (5); and in that said lever (5) is swingably supported to said driving member (8).

2. A load tying-up apparatus according to claim 1, wherein said anti-reverse-rotation pawl (72) has a shaft bore (72a), said body is provided with a pawl shaft (9) which is inserted into said shaft bore (72a) and through which said anti-reverse-rotation pawl (72) is swingably supported to said body (1), at one of the outer periphery of said pawl shaft (9) and the inner periphery of said shaft bore (72a) are provided a recess (72d) open toward the other of the outer periphery of said pawl shaft (9) and the inner periphery of said shaft bore (72a), a resilient member (75) housed in said recess, and a contact member biased by said resilient member so as to project from the open end of said recess, and at the other of the outer periphery of said pawl shaft (9) and the inner periphery of said shaft bore (72a) are provided a neutral holding portion (73d) which contacts with said contact member so as to hold the disengaging position of said anti-reverse-rotation pawl from said anti-reverse-rotation gear and an engageably holding portion which contacts with said contact member so as to maintain engagement of said anti-reverse-rotation pawl with said anti-reverse-rotation gear.

3. A load tying-up apparatus according to claim 1, wherein said transmitting pawl (10) is provided with a feed pawl (10a) and a return pawl (10b) which are engageable with said gear part (81) at said driving member (8) and a shaft bore, said lever (5) is provided with a pawl shaft (9) inserted into said shaft bore and swingably supporting said transmitting pawl to said lever, at one of the outer periphery of said pawl shaft and the inner periphery of said shaft bore are provided a recess (10g) open toward the other of the outer periphery of said pawl shaft and the inner periphery of said shaft bore, a resilient member (92) housed in said recess, and a contact member biased by said resilient member so as to project from the open end of said recess, and at the other of the outer periphery of said pawl shaft (9) and the inner periphery of said shaft bore are provided a neutral holding portion (9b) in contact with said contact member so as to hold the disengaging position of said transmitting pawl from said gear part (81), a first engageably holding portion (9c) in contact with said contact member so as to hold the engaging state of said feed pawl (10a) with said gear part, and a second engageably holding portion (9d) in contact with said contact member so as to hold the engaging state of said return pawl with said gear part.

## Patentansprüche

1. Lastverankerungsvorrichtung, die aufweist: einen Körper (1), der einen festen Seitengurt (2) besitzt; einen verstellbaren Seitengurt (3); eine Aufwickelwelle (4), die drehbar am Körper für das Aufwickeln des verstellbaren Gurtes gelagert wird; einen Bedienungshebel (5), der schwenkbar an der Aufwickelwelle (4) gelagert wird; und einen Übertragungsmechanismus (6), der zwischen dem Hebel (5) und der Aufwickelwelle (4) angeordnet wird, um eine Antriebskraft, die durch eine Schwenkbewegung des Hebels (5) hervorgerufen wird, auf die Aufwickelwelle (4) zu übertragen, dadurch gekennzeichnet, daß die Aufwickelwelle (4) an einem axialen Ende mit einem ringförmigen Teil (41) versehen ist, das sich radial nach außen von der Aufwickelwelle (4) aus erstreckt, und eine herausragende Welle (45) aufweist, die sich axial in Fortsetzung des ringförmigen Teils (41) erstreckt und einen Gewindeabschnitt (43) aufweist, wobei auf den Gewindeabschnitt (43) ein Antriebselement (8) geschraubt wird, das an seinem äußeren Umfang ein Zahnradteil (81) besitzt; dadurch, daß ein Antirücklaufzahnrad (71) durch die Aufwickelwelle (4) zwischen dem ringförmigen Teil (41) der Aufwickelwelle und dem Antriebselement (8) so gelagert wird, daß es ungehindert in bezug darauf drehbar ist, wobei das Antirücklaufzahnrad (71) so angeordnet wird, daß es mit dem ringförmigen Teil (41) und dem Antriebselement (8) durch Reibung in Eingriff gebracht wird, indem das Antriebslement (8) vorwärts auf den Gewindeabschnitt (43) geschraubt wird; dadurch, daß der Körper (1) eine Antirücklaufsperrklinke (72) aufweist, die mit dem Antirücklaufzahnrad (71) in Eingriff gebracht werden kann, und daß der Hebel (5) eine Übertragungssperrklinke (10) aufweist, die mit dem Zahnradteil (81) in oder außer Eingriff gebracht werden kann; dadurch, daß der Übertragungsmechanismus (6) das ringförmige Teil (41) der Aufwickelwelle (4), das Antriebselement (8), das Antirücklaufzahnrad (71) und die Antirücklaufsperrklinke (72) aufweist, die zusammen als mechanische Bremse (7) wirken, wobei der Übertragungsmechanismus als mechanische Bremse funktionsfähig ist, die zwischen dem ringförmigen Teil (41) und dem Hebel (5) angeordnet wird; und dadurch, daß der Hebel (5) schwenkbar am Antriebselement (8) gelagert wird.

2. Lastverankerungsvorrichtung nach Anspruch 1, bei der die Antirücklaufsperrklinke (72) eine Wellenbohrung (72a) aufweist, wobei der Körper mit einer Sperrklinkenwelle (9) versehen ist, die in die Wellenbohrung (72a) eingesetzt wird, und durch die die Antirücklaufsperrklinke (72) schwenkbar am Körper (1) gelagert wird, und wobei an einem äußeren Umfang der Sperrklinkenwelle (9) und dem inneren Umfang der Wellenbohrung (72a) eine Aussparung (72d), die zum anderen äußeren Umfang der Sperrklinkenwelle (9) und zum inneren Umfang der Wellenbohrung (72a) offen ist, ein Federelement (75), das in der Aussparung untergebracht ist, und ein Kontaktelement vorhanden sind, das durch das Federelement vorgespannt wird, um aus dem offenen Ende der Aussparung herauszuragen, und wobei am anderen äußeren Umfang der Sperrklinkenwelle (9) und dem inneren Umfang der Wellenbohrung (72a) ein neutral er Halteabschnitt (73d), der mit dem Kontaktelement in Berührung kommt, um die Ausrückstellung der Antirücklaufsperrklinke aus dem Antirücklaufzahnrad aufrechtzuerhalten, und ein in Eingriff bringbarer Halteabschnitt vorhanden sind, der mit dem Kontaktelement in Berührung kommt, um den Eingriff der Antirücklaufsperrklinke mit dem Antirücklaufzahnrad aufrechtzuerhalten.

3. Lastverankerungsvorrichtung nach Anspruch 1, bei der die Übertragungssperrklinke (10) mit einer Vorschubklinke (10a) und einer Rücklaufklinke (10b) versehen ist, die mit dem Zahnradteil (81) am Antriebselement und einer Wellenbohrung in Eingriff kommen können, wobei der Hebel (5) mit einer Sperrklinkenwelle (9) versehen ist, die in die Wellenbohrung eingesetzt wird und schwenkbar die Übertragungssperrklinke am Hebel lagert, wobei an einem äußeren Umfang der Sperrklinkenwelle und dem inneren Umfang der Wellenbohrung eine Aussparung (10g), die zum anderen äußeren Umfang der Sperrklinkenwelle und dem inneren Umfang der Wellenbohrung offen ist, ein Federelement (92), das in der Aussparung untergebracht ist, und ein Kontaktelement vorhanden sind, das durch das Federelement vorgespannt wird, um aus dem offenen Ende der Aussparung herauszuragen, und wobei am anderen äußeren Umfang der Sperrklinkenwelle (9) und dem inneren Umfang der Wellenbohrung ein neutral er Halteabschnitt (9b) in Berührung mit dem Kontaktelement, um die Ausrückstellung der Übertragungssperrklinke aus dem Zahnradteil (81) aufrechtzuerhalten, ein erster in Eingriff bringbarer Halteabschnitt (9c) in Berührung mit dem Kontaktelement, um den Eingriff der Vorschubklinke (10a) mit dem Zahnradteil aufrechtzuerhalten, und ein zweiter in Eingriff bringbarer Halteabschnitt (9d) in Berührung mit dem Kontaktelement vorhanden sind, um den Eingriff der Rücklaufsperre mit dem Zahnradteil aufrechtzuerhalten.

## Revendications

1. Un dispositif pour attacher une charge comprenant un corps (1) possédant une courroie de fixation latérale (2); une courroie d'ajustement latérale (3); un arbre d'enroulement (4) fixé par rotation au dit corps pour enrouler ladite courroie d'ajustement; un levier d'actionnement (5) fixé par oscillation au dit arbre d'enroulement (4); ainsi qu'un mécanisme de transmission (6) agencé entre ledit levier (5) et ledit arbre d'enroulement (4), pour transmettre à travers ceux-ci une force d'entraînement produite par un mouvement d'oscillation du levier (5) au dit arbre d'enroulement (4), caractérisé en ce que ledit arbre d'enroulement (4) comporte au niveau d'une extrémité axiale correspondante un élément annulaire (41) s'étendant radialement vers l'extérieur du dit arbre d'enroulement (4) et un arbre en saillie (45) s'étendant axialement en continuation du dit élément annulaire (41) et possédant une partie filetée (43), ladite partie filetée (43) étant vissée à un membre d'entraînement (8) comportant au niveau de sa périphérie externe un élément d'engrenage (81); en ce qu'un engrenage antirotation inverse (71) est supporté par ledit arbre d'enroulement (4) entre ledit élément annulaire (41) de l'arbre d'enroulement et ledit membre d'entraînement (8), de sorte à pouvoir tourner librement par rapport à celui-ci, ledit engrenage antirotation inverse (71) étant positionné de sorte à s'engager par friction dans ledit élément annulaire (41) et le membre d'entraînement (8), par l'intermédiaire du dit membre d'entraînement (8), vissé vers l'avant sur la partie filetée (43); en ce que ledit corps (1) possède un cliquet antirotation inverse (72) pouvant s'engager dans ledit engrenage antirotation inverse (71), ledit levier (5) comportant un cliquet de transmission (10) pouvant s'engager dans ledit élément d'engrenage (81) ou se dégager de celui-ci; en ce que ledit mécanisme de transmission (6) comprend ledit élément annulaire (41) de l'arbre d'enroulement (4), ledit membre d'entraînement (8), ledit engrenage antirotation inverse (71) et ledit cliquet antirotation inverse (72), agissant ensemble comme un frein mécanique (7), ledit mécanisme de transmission pouvant servir de frein mécanique étant agencé entre ledit élément annulaire (41) et ledit levier (5); et en ce que ledit levier (5) est fixé par oscillation au dit membre d'entraînement (8).

2. Un dispositif pour attacher une charge selon la revendication 1, dans lequel ledit cliquet antirotation inverse (72) comporte un alésage d'arbre (72a), ledit corps comportant un arbre à cliquet (9) inséré dans ledit alésage d'arbre (72a) et par l'intermédiaire duquel ledit cliquet antirotation inverse (72) est fixé par oscillation au dit corps (1), une périphérie externe du dit arbre à cliquet (9) et la périphérie interne du dit alésage d'arbre (72a) comportant un évidement (72d) ouvert en direction de l'autre périphérie externe du dit arbre à cliquet (9) et de la périphérie interne du dit alésage d'arbre (72a), un membre résilient (75) étant logé dans ledit évidement, un membre de contact étant pressé par ledit membre résilient de sorte à faire saillie depuis l'extrémité ouverte du dit évidement, l'autre périphérie externe du dit arbre à cliquet (9) et la périphérie interne du dit alésage d'arbre (72a) comportant une partie de maintien neutre (73d) contactant ledit membre de contact, de sorte à maintenir la position de dégagement du dit cliquet antirotation inverse écartée du dit engrenage antirotation inverse, ainsi qu'une partie de maintien à engagement, contactant ledit membre de contact, de sorte à maintenir l'engagement du dit cliquet antirotation inverse dans ledit engrenage antirotation inverse.

3. Un dispositif pour attacher une charge selon la revendication 1, dans lequel ledit cliquet de transmission (10) comporte un cliquet d'amenée (10a) et un cliquet de retour (10b), pouvant s'engager dans ledit élément d'engrenage (81) au niveau du dit membre d'entraînement (8), et un alésage d'arbre, ledit levier (5) comportant un arbre à cliquet (9) inséré dans ledit alésage d'arbre et servant à fixer par oscillation ledit cliquet de transmission au dit levier, une périphérie externe du dit arbre à cliquet et une périphérie interne du dit alésage d'arbre comportant un évidement (10g) ouvert en direction de l'autre périphérie externe du dit arbre à cliquet et de la périphérie interne du dit alésage d'arbre, un membre résilient (92) étant logé dans ledit évidement, un membre de contact étant pressé par ledit membre résilient, de sorte à faire saillie depuis l'extrémité ouverte du dit évidement, l'autre périphérie externe du dit arbre à cliquet (9) et la périphérie interne du dit alésage d'arbre comportant une partie de maintien neutre (9b), en contact avec ledit membre de contact, de façon à maintenir la position de dégagement du dit cliquet de transmission écartée du dit élément d'engrenage (81), une première partie de maintien à engagement (9c), en contact avec ledit membre de contact, de sorte à maintenir l'état d'engagement du dit cliquet d'amenée (10a) dans ledit élément d'engrenage, ainsi qu'une deuxième partie de maintien à engagement (9d), en contact avec ledit membre de contact, de façon à maintenir l'état d'engagement du dit cliquet de retour dans ledit élément d'engrenage.
